# EUROPEAN PATENT APPLICATION

(11) **EP 4 613 526 A1**
(43) Date of publication of application: **10.09.2025**
(21) Application number: 23886037.3
(22) Date of filing: 27.09.2023
(51) Int. Cl.: B60K 6/38, B60K 6/40

(54) **HYBRID DRIVING MODULE**

(30) Priority: 31.10.2022 KR 20220143079
(71) Applicant: Valeo Kapec Co., Ltd., Daegu 42709 (KR)
(72) Inventor: KIM, Jung-Woo, Daegu 42709 (KR); JO, A-Ron, Daegu 42709 (KR); PARK, Jin-Su, Daegu 42709 (KR)
(74) Representative: Isarpatent
(86) International application number: PCT/KR2023/015035
(87) International publication number: WO 2024/096340

(57) **Abstract**

A hybrid driving module of the present invention includes a rotor hub having a hub shaft and configured to support a rotor, a driving shaft disposed coaxially with the hub shaft, disposed forward of the hub shaft, and connected to an engine, a first bearing configured to connect the hub shaft and the driving shaft to allow a relative rotation between the hub shaft and the driving shaft, a first snap ring configured to restrict the driving shaft and the first bearing in at least one axial direction, and an inner carrier coupled to the driving shaft so that the inner carrier is restricted in the axial direction and a rotation of the inner carrier is restricted. The first snap ring is interposed between the driving shaft and the inner carrier in the axial direction and restricted in the axial direction together with the driving shaft and the inner carrier. The driving shaft and the inner carrier are coupled such that a centrifugal extension portion extending radially outward from the driving shaft and a centripetal extension portion radially inward from the inner carrier face each other in the axial direction. A first groove recessed radially inward is provided in a partial section of the centrifugal extension portion based on a circumferential direction. Snap ring ears, which are held to adjust a diameter of the first snap ring, are exposed forward in the axial direction through the first groove.

## Description

### [Technical Field]

This application claims priority to and the benefit of Korean Patent Application No. 10-2022-0143079 filed in the Korean Intellectual Property Office on October 31, 2022, the entire contents of which are incorporated herein by reference.

The present invention relates to a hybrid driving module, and more particularly, to a hybrid driving module having a structure that is easy to manufacture and assemble.

### [Background Art]

A drive module used for a hybrid vehicle has a structure configured to transmit a force of a motor and a force of an engine to a transmission. A hybrid driving module includes an input member configured to receive the force of the engine, a motor, an engine clutch configured to connect the input member and the motor, an output member configured to receive the force of the motor and/or the engine and transmit the force to the transmission, and a power transmission part configured to connect the motor and the output member. The power transmission part may have a structure configured to connect the motor directly to the output member or including a torque converter and a lock-up clutch.

Patent Document 1 discloses a hybrid driving module having a structure in which a multi-plate clutch is provided as an engine clutch radially inside a rotor hub in which a rotor of a motor is installed, and a piston plate for engaging or disengaging the multi-plate clutch is installed on a hub shaft of the rotor hub. In the hybrid driving module, a bearing for supporting a relative rotation between the rotor hub and the input member is installed, and a bearing for supporting a relative rotation between the input member and a main housing is installed.

In order to install the bearing, stepped projection structures, which interfere with the bearing in one axial direction, are provided on the hub shaft, a driving shaft of the input member, and the main housing, and a structure in which a snap ring, which interferes with the bearing in the other axial direction, may be installed is provided.

However, during a process of assembling components, a route through which the components approach the snap ring is blocked by the components, which may cause a situation in which it is difficult to install the snap ring. Patent Document 1 proposes a method that forms a hole in the driving shaft of the input member and provides a route through which the snap ring may be installed.

However, the above-mentioned method has a problem of inconvenience and difficulty because a separate process of forming a plurality of through-holes through the driving shaft in the axial direction is required after the driving shaft is manufactured, the bearing having a special shape needs to be manufactured, and the through-holes and an ear portion of the snap ring need to be aligned during an assembling process, which increases processing costs and requires a large amount of production time.

There is Patent Document US 2021/0146770 A1 as a document of related art.

### [Disclosure]

### [Technical Problem]

The present invention has been made in an effort to solve the above-mentioned problem, and an object of the present invention is to provide a hybrid driving module that is easy to assemble/disassemble even without separately forming a through-hole after a driving shaft is manufactured.

Another object of the present invention is to provide a hybrid driving module that is easy to assemble/disassemble because a snap ring is simply installed even without using a bearing having a special shape.

Still another object of the present invention is to provide a hybrid driving module that is easy to assemble/disassemble because a separate process of aligning an ear portion of a snap ring during an assembling process is not required.

Yet another object of the present invention is to provide a hybrid driving module that is easy to assemble/disassemble because the number of assembling processes is reduced because a driving shaft and a snap ring may be inserted together during an assembling process.

The technical objects of the present invention are not limited to the above-mentioned objects, and other objects and advantages of the present invention, which are not mentioned above, may be understood from the following descriptions and more clearly understood from the embodiment of the present invention. In addition, it can be easily understood that the objects and advantages of the present invention may be realized by means defined in the claims and a combination thereof.

### [Technical Solution]

In order to achieve the above-mentioned objects, the present invention may be applied to a hybrid driving module including a rotor hub having a hub shaft and configured to support a rotor, a driving shaft disposed coaxially with the hub shaft, disposed forward of the hub shaft, and connected to an engine, a first bearing configured to connect the hub shaft and the driving shaft to allow a relative rotation between the hub shaft and the driving shaft, a first snap ring configured to restrict the driving shaft and the first bearing in at least one axial direction, and an inner carrier coupled to the driving shaft so that the inner carrier is restricted in the axial direction and a rotation of the inner carrier is restricted.

The first snap ring is interposed between the driving shaft and the inner carrier in the axial direction and restricted in the axial direction together with the driving shaft and the inner carrier.

The driving shaft and the inner carrier are coupled such that a centrifugal extension portion extending radially outward from the driving shaft and a centripetal extension portion radially inward from the inner carrier face each other in the axial direction.

A first groove recessed radially inward is provided in a partial section of the centrifugal extension portion based on a circumferential direction.

Snap ring ears, which are held to adjust a diameter of the first snap ring, are exposed forward in the axial direction through the first groove.

A snap ring accommodation groove for accommodating the first snap ring may be provided in a rear surface of the driving shaft.

The snap ring accommodation groove may be provided only in the rear surface of the driving shaft.

A snap ring accommodation groove for accommodating the first snap ring may be provided in a front surface of the inner carrier.

The snap ring accommodation groove may be provided only in the front surface of the inner carrier.

Snap ring accommodation grooves for accommodating the first snap ring may be provided in a rear surface of the driving shaft and a front surface of the inner carrier.

A single snap ring accommodation groove may be defined as the snap ring accommodation groove provided in the rear surface of the driving shaft and the snap ring accommodation groove provided in the front surface of the inner carrier face each other.

The snap ring accommodation groove provided in the driving shaft may be provided at a radial inner end of the centrifugal extension portion.

The first groove may extend to the snap ring accommodation groove. Therefore, the snap ring accommodation groove may have a shape opened in a centrifugal direction in a circumferential section in which the first groove is provided.

The snap ring accommodation groove provided in the inner carrier may be provided at a radial inner end of the centripetal extension portion.

A first through-hole and a second through-hole may be respectively provided in the centrifugal extension portion and the centripetal extension portion.

The first through-hole and the second through-hole may be aligned and coupled by a rivet, such that the driving shaft and the inner carrier may be integrated.

The first groove may be provided as one or more first grooves.

The first groove may be provided as two or more first grooves radially disposed with respect to a center of the driving shaft. Therefore, it is possible to improve the convenience of assembling and the axial balance by eliminating the directionality.

In the embodiment, a recessed groove recessed axially rearward may be provided in a section of the centripetal extension portion corresponding to a section in which the first groove is provided in the circumferential direction.

The recessed groove may be connected to the snap ring accommodation groove provided in the inner carrier in the radial direction.

The recessed groove may be provided as one or more recessed grooves.

The recessed groove may be provided as two or more recessed grooves radially disposed with respect to a center of the inner carrier. Therefore, it is possible to improve the convenience of assembling and the axial balance by eliminating the directionality.

In another embodiment, a second groove recessed radially outward may be provided in a section of the centripetal extension portion corresponding to a section in which the first groove is provided in the circumferential direction.

The second groove may be connected to the snap ring accommodation groove provided in the inner carrier in the circumferential direction.

The second groove may be provided as one or more second grooves.

The second grooves may be provided as two or more second grooves radially disposed with respect to a center of the inner carrier. Therefore, it is possible to improve the convenience of assembling and the axial balance by eliminating the directionality.

The first bearing may include: an inner race externally inserted into an outer peripheral surface of the hub shaft; an outer race internally inserted into an inner peripheral surface of the driving shaft; and a rolling element interposed between the inner race and the outer race.

The first snap ring may protrude radially inward to interfere with the outer race in the axial direction from a radially outer side of the outer race.

The outer race of the first bearing may interfere with the first snap ring such that a rearward axial movement of the outer race of the first bearing related to the driving shaft may be restricted.

The outer race of the first bearing may interfere with a stepped projection shape of the driving shaft such that a forward axial movement of the outer race of the first bearing related to the driving shaft may be restricted.

The inner race of the first bearing may interfere with a stepped projection shape of the hub shaft such that a rearward axial movement of the inner race of the first bearing related to the hub shaft may be restricted.

A forward axial movement of the inner race of the first bearing may be restricted by a second snap ring coupled to an outer peripheral surface of the hub shaft.

In addition, the present invention provides a method of assembling the hybrid driving module.

The hybrid driving module may be assembled by the following steps.
(1) A first step of externally inserting a first bearing into the hub shaft from a front side of the hub shaft and fixing the first bearing in the axial direction
(2) A step of externally inserting an assembly of the driving shaft, the inner carrier, and the first snap ring into the first bearing from a front side of the hub shaft in a state in which the snap ring ear is held by a jig and a diameter of the first snap ring is increased
(3) A step of allowing the first snap ring to restrict the first bearing in the axial direction by decreasing the diameter of the first snap ring by removing the jig in the state in which the assembly is externally inserted

In addition, the present invention provides a method of disassembling the hybrid driving module.

The hybrid driving module may be disassembled by the following steps.
(1) A step of releasing the restriction of the first snap ring in the axial direction with respect to the first bearing by increasing a diameter of the first snap ring by holding the snap ring ears from a front side of the hub shaft by using a jig
(2) A step of detaching the assembly of the driving shaft, the inner carrier, and the first snap ring forward from the first bearing
(3) A step of releasing the first bearing in the axial direction with respect to the hub shaft and detaching the first bearing forward from the hub shaft

### [Advantageous Effects]

According to the hybrid driving module of the present invention, the snap ring is interposed between the connection portions of the driving shaft and the inner carrier, and the driving shaft has the shape from which the ears of the snap ring are exposed, such that a separate through-hole does not need to be formed in the driving shaft to manipulate the snap ring. Therefore, it is possible to implement the structure, in which the hybrid driving module is easily assembled or disassembled, and reduce manufacturing costs.

According to the hybrid driving module of the present invention, it is possible to install the snap ring so that the snap ring interferes with the bearing in the axial direction even though a general bearing other than a bearing with a special shape is used. Therefore, it is possible to implement the structure, in which the hybrid driving module is easily assembled or disassembled, and reduce manufacturing costs.

According to the hybrid driving module of the present invention, the ears of the snap ring may be temporarily aligned so as to be exposed when the snap ring is interposed between the connection portions of the driving shaft and the inner carrier, such that the ear portions of the snap ring do not need to be separately aligned during the assembling process. Therefore, the hybrid driving module is easily assembled or disassembled.

According to the hybrid driving module of the present invention, the snap ring is temporarily fastened and assembled to the assembly of the driving shaft and the inner carrier, such that the driving shaft, the inner carrier, and the snap ring may be installed altogether during the assembling process. As described above, the present invention may reduce the number of processes of assembling the hybrid driving module.

According to the hybrid driving module of the present invention, the recessed groove is provided in the inner carrier, and the inner carrier does not need to have a shape formed through the inner carrier in the axial direction, such that a route through which oil moves in the axial direction through the inner carrier is not formed. Therefore, the flow path for the oil flowing in the hybrid driving module may be easily designed.

According to the present invention, only the configuration in which the lock-up piston and the damper are spline-coupled in the axial direction may restrict the rotation and enable the assembling, which makes the disassembling and assembling processes convenient.

The specific effects of the present invention, together with the above-mentioned effects, will be described along with the description of specific items for carrying out the present invention.

### [Description of Drawings]

FIG. 1 is a front view illustrating a state in which a main housing is excluded from a hybrid driving module according to first and second embodiments of the present invention.
FIG. 2 is a cross-sectional view taken along line II-II in FIG. 1 and illustrating the hybrid driving module of the first and second embodiments.
FIG. 3 is a cross-sectional view taken along line III-III in FIG. 1 and illustrating the hybrid driving module of the first and second embodiments.
FIG. 4 is a cross-sectional view taken along line IV-IV in FIG. 1 and illustrating the hybrid driving module of the first embodiment.
FIGS. 5 and 6 are exploded perspective views illustrating a driving shaft, an inner carrier, and a first snap ring of the hybrid driving module of the first embodiment illustrated in FIGS. 2 to 4.
FIG. 7 is a cross-sectional view taken along line IV-IV in FIG. 1 and illustrating the hybrid driving module of the first embodiment.
FIGS. 8 and 9 are exploded perspective views of a driving shaft, an inner carrier, and a first snap ring of the hybrid driving module of the second embodiment illustrated in FIGS. 2, 3, and 7.
FIGS. 10 and 11 are perspective views illustrating a modified example of the inner carrier of the hybrid driving module of the first embodiment.
FIGS. 12 and 13 are perspective views illustrating a modified example of the inner carrier of the hybrid driving module of the second embodiment.

### <Explanation of Reference Numerals and Symbols>

10: Rotor hub, 11: Hub shaft, 12: Shaft, 13: First radial extension portion, 13, 23, or 33: Radial extension portion, 35 or 45: Axial extension portion, 15: Rotor, 20: Front cover, 23: Second radial extension portion, 25: Rearward extension portion, 27: Radially enlarged portion, 29: Lock-up clutch carrier, 30: Connector, 33: Third radial extension portion, 35: First axial extension portion, 40: Outer carrier, 45: Second axial extension portion, 47: Inward teeth, 49: Friction plate, 50: Inner carrier, 51: Centripetal extension portion, 511: Second through-hole, 513: Recessed groove, 514: Snap ring accommodation groove, 53: Second groove, 57: Outward teeth, 60: Driving shaft, 61: Centrifugal extension portion, 612: First through-hole, 614: Snap ring accommodation groove, 63: First groove, 70: Piston plate, 75: Chamber plate, 80: Main housing, 90: Rear cover, B1: First bearing, B2: Second bearing, E: Elastic body, R: Rivet, CC: Compensation chamber, PC: Piston chamber, S1: First snap ring, S2: Second snap ring, SE: Snap ring ear

### [Mode for Invention]

Hereinafter, exemplary embodiments of the present invention will be described in detail with reference to the accompanying drawings.

The present invention is not limited to the embodiments disclosed herein, but will be variously changed and implemented in various different forms. The embodiments are provided so that the present invention will be thorough and complete, and also to provide a more complete understanding of the scope of the present invention to those of ordinary skill in the art. Therefore, it should be understood that the present invention is not limited to the embodiments disclosed below, but the configuration of any one embodiment and the configuration of another embodiment can be substituted or added, and the present invention includes all alterations, equivalents, and alternatives that are included in the technical spirit and scope of the present invention.

It should be interpreted that the accompanying drawings are provided only to allow those skilled in the art to easily understand the exemplary embodiments disclosed in the present specification, and the technical spirit disclosed in the present specification is not limited by the accompanying drawings, and includes all alterations, equivalents, and alternatives that are included in the spirit and the technical scope of the present invention. In the drawings, sizes or thicknesses of constituent elements may be exaggerated, increased, or decreased for convenience of understanding, but the protection scope of the present invention should not be restrictively construed.

The terms used in the present specification are used only for the purpose of describing particular examples or embodiments and are not intended to limit the present invention. Further, singular expressions include plural expressions unless clearly described as different meanings in the context. In the present application, the terms "comprises," "comprising," "includes," "including," "containing," "has," "having", and other variations thereof are inclusive and therefore specify the presence of features, integers, steps, operations, elements, components, and/or combinations thereof disclosed in the specification. That is, in the present application, the terms "comprises," "comprising," "includes," "including," "containing," "has," "having", and other variations thereof do not preclude the presence or addition of one or more other features, integers, steps, operations, elements, components, and/or combinations thereof.

The terms including ordinal numbers such as "first," "second," and the like may be used to describe various constituent elements, but the constituent elements are not limited by the terms. These terms are used only to distinguish one constituent element from another constituent element.

When one constituent element is described as being "coupled" or "connected" to another constituent element, it should be understood that one constituent element can be coupled or connected directly to another constituent element, and an intervening constituent element can also be present between the constituent elements. When one constituent element is described as being "coupled directly to" or "connected directly to" another constituent element, it should be understood that no intervening constituent element is present between the constituent elements.

When one constituent element is described as being "disposed above" or "disposed below" another constituent element, it should be understood that one constituent element can be disposed directly on another constituent element, and an intervening constituent element can also be present between the constituent elements.

Unless otherwise defined, all terms used herein, including technical or scientific terms, have the same meaning as commonly understood by those skilled in the art to which the present invention pertains. The terms such as those defined in a commonly used dictionary should be interpreted as having meanings consistent with meanings in the context of related technologies and should not be interpreted as ideal or excessively formal meanings unless explicitly defined in the present application.

Because a hybrid driving module according to an embodiment is symmetrical with respect to an axis, only the half of the hybrid driving module based on the axis is illustrated for the convenience of illustration. In addition, for the convenience of description, a direction along a longitudinal direction of an axis defining a center of a rotation of the hybrid driving module is defined as an axial direction. That is, a forward/rearward direction or an axial direction is defined as a direction parallel to a rotation axis. A front (forward) means any one direction of a power source, e.g., a direction toward an engine. A rear (rearward) means the other direction, e.g., a direction toward a transmission. Therefore, a front surface means a surface facing forward, and a rear surface means a surface facing rearward.

A radial direction means a direction toward or away from a center of the rotation axis along a straight line passing through the center of the rotation axis on the plane perpendicular to the rotation axis. A direction radially away from the center is referred to as a centrifugal direction, and a direction toward the center is referred to as a centripetal direction.

A peripheral direction or a circumferential direction means a direction surrounding a periphery of the rotation axis. An outer periphery means an outer circumference, and an inner periphery means an inner circumference. Therefore, an outer peripheral surface is a surface facing away from the rotation axis, and an inner peripheral surface is a surface facing the rotation axis.

A circumferential surface means a surface, a normal line of which is directed in a circumferential direction.

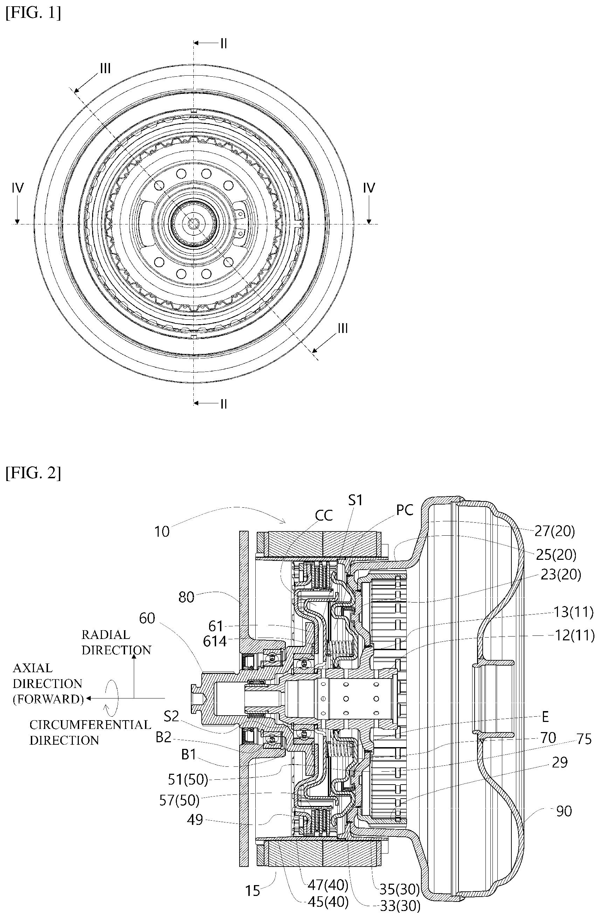

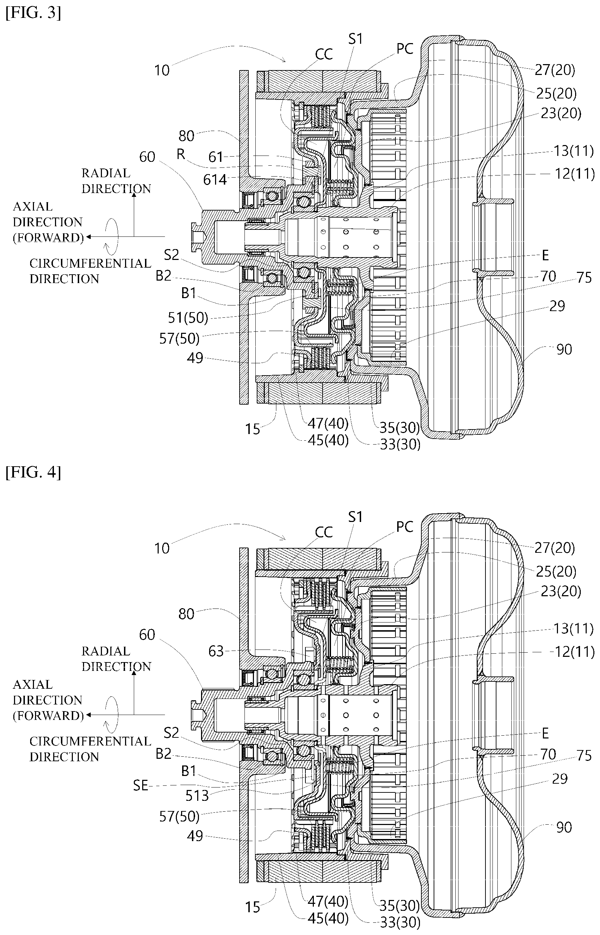

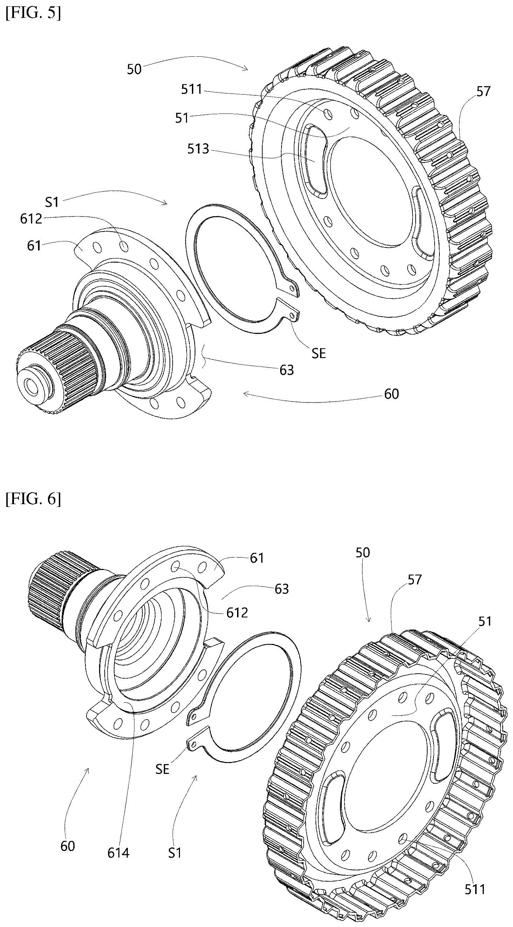

Hereinafter, a first embodiment of a hybrid driving module according to the present invention will be described with reference to FIGS. 1 to 6.

### [Overall Structure of Hybrid Driving Module]

The hybrid driving module includes a driving shaft 60 configured to receive a force from an engine, a motor including a stator (not illustrated) and a rotor 15, a main housing 80 in which the stator is installed, a rotor hub 10 on which the rotor 15 is installed, the rotor hub 10 being configured to rotate together with the rotor 15, engine clutches 40, 49, and 50 disposed between the driving shaft 60 and the rotor hub 10 and configured to selectively connect the driving shaft 60 and the rotor hub 10 so that power of the driving shaft 60 is transmitted to the rotor hub 10, and a power transmission part disposed between the rotor hub 10 and an output member (not illustrated) and configured to transmit a rotational force of the rotor hub 10 to the output member.

The power transmission part is disposed in an internal space defined by covers 20 and 90 connected to the rotor hub 10 at a rear side of the rotor hub 10. The power transmission part includes a torque converter (not illustrated) configured to transmit a rotational force, which is transmitted from the rotor hub 10 through the covers 20 and 90, to the output member, and a lock-up clutch (not illustrated) configured to transmit a rotational force, which is transmitted from the rotor hub 10, directly to the output member. A pendulum (not illustrated) or a torsional damper (not illustrated) is interposed between the lock-up clutch and the output member to smooth out an output. A friction plate, which constitutes the lock-up clutch, may be inserted into a lock-up clutch carrier 29 fixed to the rotor hub 10 so that a rotation of the friction plate is restricted.

The rotor hub 10 includes a hollow hub shaft 11 disposed at a centripetal side and extending in an axial direction, radial extension portions 13, 23, and 33 extending radially outward from the hub shaft 11, and axial extension portions 35 and 45 disposed at a centrifugal side, connected to the radial extension portions 13, 23, and 33, and extending in a forward/rearward direction. The rotor 15 is installed on outer peripheries of the axial extension portions 35 and 45.

The rotor hub 10 may be manufactured by coupling a plurality of components. The components, which constitute the rotor hub 10, may include the hub shaft 11, a front cover 20, a connector 30, and an outer carrier 40.

The hub shaft 11 includes a hollow shaft 12 extending in the forward/rearward direction, and a first radial extension portion 13 extending radially outward from an outer periphery of the shaft 12.

The front cover 20 includes a second radial extension portion 23 welded to a centrifugal side of the first radial extension portion 13 and extending radially outward, a rearward extension portion 25 extending rearward from a centrifugal side end of the second radial extension portion 23, and a radially enlarged portion 27 extending radially outward from a rear end of the rearward extension portion 25 and welded to a rear cover 90. The lock-up clutch carrier 29 may be welded to a rear surface of the second radial extension portion 23.

The connector 30 includes a third radial extension portion 33 welded to a centrifugal side of the second radial extension portion 23 and extending radially outward, and a first axial extension portion 35 connected to a centrifugal side of the third radial extension portion 33 and extending rearward. The first axial extension portion 35 may be disposed radially outward of the rearward extension portion 25.

The outer carrier 40 includes a second axial extension portion 45 welded to a centrifugal side of the third radial extension portion 33 and extending forward. Inward teeth 47 are provided on an inner periphery of the second axial extension portion 45 and protrude in a centripetal direction. An outer peripheral surface of the second axial extension portion 45 constitutes a surface connected to an outer peripheral surface of the first axial extension portion 35. Therefore, the rotor 15 may be installed on the first axial extension portion 35 and the outer peripheral surface of the second axial extension portion 45.

The radial extension portions 13, 23, and 33 of the rotor hub 10 may include the first radial extension portion 13, the second radial extension portion 23, and the third radial extension portion 33. Further, the axial extension portions 35 and 45 of the rotor hub 10 may include the first axial extension portion 35 and the second axial extension portion 45.

Because the rotor hub 10 is configured by coupling the plurality of components as described above, the most reasonable manufacturing method (e.g., die casting, sheet metal pressing, etc.) may be applied in accordance with shapes that the components need to have, such that costs required to manufacture the rotor hub 10 may be reduced.

The driving shaft 60 is provided forward of the hub shaft 11. The driving shaft 60 may be disposed coaxially with the hub shaft 11, configured to rotate related to the hub shaft 11, and connected to the engine.

The driving shaft 60 may have a hollow portion, and the hollow portion may be opened rearward. The hub shaft 11 may enter the hollow portion of the driving shaft 60 from a rear side of the driving shaft 60 and be disposed in the hollow portion of the driving shaft 60.

In order to axially align the driving shaft 60 and the hub shaft 11 while allowing a relative rotation between the driving shaft 60 and the hub shaft 11, bearings may be installed between an outer periphery of the hub shaft 11 and an inner periphery of the driving shaft 60. The bearings may be installed at two positions spaced apart from each other in the axial direction. As illustrated, a needle bearing may be installed at a front side based on the axial direction, and a first bearing B1 may be installed at a rear side based on the axial direction.

The first bearing B1 may include an inner race configured to adjoin an outer periphery of the hub shaft 11, an outer race configured to adjoin an inner periphery of the driving shaft 60, and a plurality of rolling elements (balls) disposed between the inner race and the outer race. Axial positions of the driving shaft 60 and the hub shaft 11 are restricted by the first bearing B1.

To this end, a stepped projection, which has a decreased inner diameter, is provided on the inner periphery of the driving shaft 60, and a front side of the outer race of the first bearing B1 interferes with the stepped projection. Therefore, a forward movement of the first bearing B1 related to the driving shaft 60 is restricted. Further, a snap ring accommodation groove 614 is provided on the inner periphery of the driving shaft 60 in a circumferential direction, and a first snap ring S1 is fitted into the snap ring accommodation groove 614. A portion of the first snap ring further protruding radially inward than the inner periphery of the driving shaft 60 interferes with a rear side of the outer race of the first bearing B1. Therefore, a rearward movement of the first bearing B1 related to the driving shaft 60 is restricted.

Further, a stepped projection, which has an increased outer diameter, is provided on the outer periphery of the hub shaft 11, and a rear side of the inner race of the first bearing B1 interferes with the stepped projection. Therefore, a rearward movement of the first bearing B1 related to the hub shaft 11 is restricted. Further, a predetermined groove is provided on the outer periphery of the hub shaft 11 in the circumferential direction, and a second snap ring S2 is fitted into the predetermined groove. A portion of the second snap ring further protruding radially outward than the outer periphery of the hub shaft 11 interferes with a front side of the inner race of the first bearing B1. Therefore, a forward movement of the first bearing B1 related to the hub shaft 11 is restricted.

An inner carrier 50 is coupled to the rear side of the driving shaft 60. The inner carrier 50 is coupled to the driving shaft 60 so that the inner carrier 50 is restricted in the axial direction and a rotation of the inner carrier 50 is restricted.

A centrifugal extension portion 61 extending radially outward is provided at a rear end of the driving shaft 60, and a centripetal extension portion 51 extending radially inward is provided on the inner carrier 50. The centrifugal extension portion 61 and the centripetal extension portion 51 may be disposed to overlap each other when viewed in the axial direction, and a front surface of the centripetal extension portion 51 may face and adjoin a rear surface of the centrifugal extension portion 61.

A plurality of first through-holes 612 are formed in the centrifugal extension portion 61 in the circumferential direction, and a plurality of second through-holes 511 are also formed in the centripetal extension portion 51 in the circumferential direction. The plurality of first through-holes 612 and the plurality of second through-holes 511 are aligned to communicate with one another in the forward/rearward direction. Further, the first through-hole 612 and the second through-hole 511 are coupled by a rivet R. Therefore, the driving shaft 60 and the inner carrier 50 may be integrated.

In this case, the first snap ring S1 is interposed between the driving shaft 60 and the inner carrier 50 in the axial direction, and the first snap ring S1, the driving shaft 60, and the inner carrier 50 are restricted in the axial direction.

In a state in which the first snap ring S1 is accommodated in the snap ring accommodation groove 614 of the driving shaft 60, a front surface of the first snap ring S1 interferes with a rear surface of the driving shaft 60, and a rear surface of the first snap ring S1 interferes with a front surface of the centripetal extension portion 51 of the inner carrier 50. Therefore, an axial position of the first snap ring S1 with respect to the driving shaft 60 and the inner carrier 50 is restricted.

In a state in which no external force is applied to the first snap ring S1, an inner diameter of the snap ring accommodation groove 614 is larger than an outer diameter of the first snap ring S1. Therefore, the first snap ring S1 may be elastically transformed, and a radius of the first snap ring S1 may be increased.

The embodiment discloses the structure in which a predetermined groove is provided at a rear end of the outer race of the first bearing B1, and the first snap ring S1 engages with the predetermined groove. However, the engagement structure between the first snap ring S1 and the first bearing B1 is not limited thereto. For example, of course, a groove may be provided in the vicinity of a central portion of the outer race of the first bearing B1 in the axial direction, and the first snap ring S1 may be fitted into the groove. In addition, on the contrary, even though no separate groove shape is provided in the outer race of the first bearing B1, the front surface of the first snap ring S1 may, of course, adjoin the rear surface of the first bearing B1, and the front surface of the first snap ring S1 and the rear surface of the first bearing B1 may interfere with each other in the axial direction.

Outward teeth 57 extending in the axial direction are provided on the inner carrier 50 and disposed radially outward of the centripetal extension portion 51. The outward teeth 57 face the inward teeth 47 and are disposed to be spaced apart radially inward from the inward teeth 47 of the rotor hub 10. Further, a plurality of friction plates 49, which are restricted in rotation relative to the inward teeth 47, and a plurality of friction plates 49, which are restricted in rotation related to the outward teeth 57, are alternately installed in the axial direction between the inward teeth 47 and the outward teeth 57 and constitute an engine clutch.

A chamber plate 75 is provided rearward of the inner carrier 50. The chamber plate 75 is installed on the hub shaft 11. A centripetal side end of the chamber plate 75 is interposed between the rear surface of the inner race of the first bearing B1 and the front surface of the stepped projection of the hub shaft 11, such that the axial position of the chamber plate 75 with respect to the hub shaft 11 is restricted.

A piston plate 70 is provided between the chamber plate 75, the friction plates 49, and the radial extension portions 13, 23, and 33 of the rotor hub 10. A centripetal side end of the piston plate 70 is installed on the surface of the hub shaft 11 so as to be slidable in the axial direction in a sealed state. A radial central portion of the piston plate 70 is installed to be slidable in the axial direction in a state of being sealed from the chamber plate 75 and installed to be slidable in the axial direction in a state of being sealed from the rotor hub 10.

A space between the rear surface of the piston plate 70 and the front surface of the rotor hub 10 defines a piston chamber PC, and a space between the front surface of the piston plate 70 and a rear surface of the chamber plate 75 defines a compensation chamber CC.

The piston chamber PC and the compensation chamber CC are filled with oil. Therefore, dynamic pressure applied to the oil in the piston chamber PC and the compensation chamber CC is constant even though a rotational velocity of the rotor hub 10 varies.

When positive pressure in the piston chamber PC increases as hydraulic pressure is transmitted to the piston chamber PC through the hollow portion of the hub shaft 11, the piston plate 70 moves forward and presses the friction plate 49 forward, such that a rotation of the driving shaft 60 is restricted by the rotor hub 10.

An elastic body E is installed between the chamber plate 75 and the piston plate 70 and elastically presses the chamber plate 75 and the piston plate 70 away from each other. Therefore, when a force by which positive pressure of the oil applied to the piston chamber PC presses the piston plate 70 forward becomes lower than an elastic force of the elastic body E, the piston plate 70 may move away from the friction plate 49 while being moved immediately rearward by the elastic body E, such that the restriction of the rotation of the driving shaft 60 related to the rotor hub 10 may be released. A response speed of the engagement and disengagement of the engine clutch is ensured.

The rotation of the driving shaft 60 is supported by the main housing 80, and the axial position of the driving shaft 60 is restricted. To this end, a second bearing B2 is installed between the outer periphery of the driving shaft 60 and the inner periphery of the main housing 80. The second bearing B2 is disposed forward of the first bearing B1 in the axial direction.

A rear side of an inner race of the second bearing B2 is restricted rearward by adjoining the stepped projection provided on the outer periphery of the driving shaft 60, and a front side of the inner race of the second bearing B2 is restricted forward by adjoining the snap ring inserted into the outer periphery of the driving shaft 60.

A front side of an outer race of the second bearing B2 is restricted forward by adjoining the stepped projection provided on the inner periphery of the main housing 80, and a rear side of the outer race of the second bearing B2 is restricted rearward by adjoining the snap ring inserted into the inner periphery of the main housing 80.

### [Structure Related to Disassembling and Assembling of Hybrid Driving Module]

The first snap ring S1 has a "C" shape, and a pair of snap ring ears SE are provided at circumferential ends of the first snap ring S1 to engage with a jig. When the snap ring ears SE are held and the first snap ring S1 is spread in the circumferential direction, a diameter of the first snap ring S1 increases. When the first snap ring S1 is released, the first snap ring S1 is elastically restored in a direction in which the diameter of the first snap ring S1 is restored.

A first groove 63 recessed radially inward is provided in a partial section of the centrifugal extension portion 61 of the driving shaft 60 based on the circumferential direction. The embodiment discloses a structure in which two first grooves 63 are provided. The first grooves 63 may be provided as a plurality of first grooves 63, and the plurality of first grooves 63 may be disposed at equal intervals in the circumferential direction to implement weight balance. Therefore, the directionality is not provided, such that the assembling may be facilitated. The embodiment discloses a structure in which two first grooves 63 are disposed at an interval of 180 degrees. However, the number of first grooves 63 does not necessarily need to be two. One, three, four, or more first grooves 63 may, of course, be provided.

The snap ring accommodation groove 614 may be provided at a radial inner end of the centrifugal extension portion 61 at a rear end of the driving shaft 60. The snap ring accommodation groove 614 has a shape opened rearward. In addition, the first groove 63 may have a shape recessed radially inward to the extent that the snap ring accommodation groove 614 has a shape opened in the centrifugal direction through the first groove 63.

Therefore, the snap ring ears SE may be aligned in the circumferential direction so as to be exposed forward in the axial direction through the first groove 63 in the state in which the first snap ring S1 is accommodated in the snap ring accommodation groove 614. Therefore, an operator may manipulate the first snap ring S1 by approaching the snap ring ears SE of the first snap ring S1 from the front side of the driving shaft 60 even though the first snap ring S1 is disposed rearward of the driving shaft 60 when the driving shaft 60 is viewed from the front side of the driving shaft 60.

The first snap ring S1 may further protrude radially inward than the inner peripheral surface of the driving shaft 60 in a state in which no external force is applied to the first snap ring S1 in the state in which the first snap ring S1 is accommodated in the snap ring accommodation groove 614 between the driving shaft 60 and the inner carrier 50.

When the snap ring ears SE exposed through the first groove 63 are held by the jig (not illustrated) and spread in the circumferential direction so that the snap ring ears SE move away from each other, a diameter of the first snap ring S1 is increased. In this state, the first snap ring S1 is hidden in the snap ring accommodation groove 614, such that the first snap ring S1 does not further protrude radially inward than the inner peripheral surface of the driving shaft 60.

The diameter of the snap ring accommodation groove 614 is larger than an outer diameter of the first snap ring S1, thereby providing an available space in which the diameter of the first snap ring S1 may be increased.

In the first embodiment illustrated in FIGS. 1 to 6, recessed grooves 513 recessed axially rearward may be provided in a section of the centripetal extension portion 51 corresponding to a section in which the first grooves 63 are provided in the circumferential direction. Therefore, a predetermined space is provided rearward of the snap ring ears SE aligned in the first groove 63, which makes it easy for the jig to hold the snap ring ears SE of the first snap ring S1. The embodiment discloses a structure in which two recessed grooves 513 are disposed at an equal interval in the circumferential direction, like the first grooves 63. Therefore, the directionality is not provided, such that the assembling may be facilitated.

The driving shaft 60 and the inner carrier 50 are manufactured as separate components and then coupled. For example, the driving shaft 60 may be manufactured by performing die casting and then performing machining processing, and the inner carrier 50 may be manufactured by performing sheet metal pressing, thereby reducing processing costs. Because the shape of the first groove 63 may be implemented in advance in a die-casting step without performing separate drilling processing, the drilling processing for forming a through-hole to manipulate the snap ring may be excluded.

Further, the recessed grooves 513 provided in the inner carrier 50 may also be implemented altogether in a press processing step without separate processing. The recessed groove 513 may separate a front space of the inner carrier 50 and a rear space of the inner carrier 50 while providing the predetermined space rearward of the snap ring ears SE. Therefore, the amount of oil, which is supplied into the space between the inner carrier 50 and the chamber plate 75 to lubricate the first bearing B1 and the friction plate 49 and leaks to another space through the inner carrier 50, may be minimized, which provides an advantage in terms of lubrication design.

In addition, because the snap ring accommodation groove 614 is provided at the radial inner end of the centrifugal extension portion 61, the snap ring ears SE, which is exposed to the space defined by the first groove 63 in the state in which the first snap ring S1 is inserted into the snap ring accommodation groove 614, may interfere with the centrifugal extension portion 61 in the circumferential direction. That is, in the state in which the first snap ring S1 is accommodated in the snap ring accommodation groove 614, the snap ring ears SE are aligned with the first groove 63, and the driving shaft 60 and the inner carrier 50 are integrated, the first snap ring S1 does not separate from the snap ring accommodation groove 614, and the state in which the snap ring ears SE are aligned with the first groove 63 is consistently maintained.

Therefore, once the driving shaft 60, the inner carrier 50, and the first snap ring S1 are assembled, the driving shaft 60, the inner carrier 50, and the first snap ring S1 may be treated as a single assembly during the process of assembling the hybrid driving module.

Because the snap ring ears SE interfere with the centrifugal extension portion 61 in the circumferential direction, a circumferential length of the first groove 63 may be determined within a range in which the snap ring ears SE may be sufficiently spread.

### [Assembling/Disassembling of Hybrid Driving Module]

The above-mentioned hybrid driving module may be assembled by the following steps.

First, the rotor hub 10 is prepared. Further, an assembly of the piston plate 70 and the chamber plate 75 with the elastic body E interposed therebetween is prepared.

Next, the piston plate 70 and the chamber plate 75 are externally inserted into the outer peripheral surface of the hub shaft 11 in the space between the hub shaft 11 of the rotor hub 10 and the axial extension portions 35 and 45. In this case, the centripetal end of the piston plate 70 is slidably installed on the hub shaft 11, and the centripetal end of the chamber plate 75 is caught by the stepped projection of the hub shaft 11, such that an axial insertion depth is restricted. In this case, the piston plate 70, the elastic body E, and the chamber plate 75 are not configured in the form of an assembly, but the piston plate 70, the elastic body E, and the chamber plate 75 may, of course, be individually assembled.

Next, the first bearing B1 is externally inserted into the outer peripheral surface of the hub shaft 11. In this case, the inner race of the first bearing B1 interferes with the stepped projection and the chamber plate 75, such that an insertion depth is restricted. After the first bearing B1 is inserted, the second snap ring S2 is fixed by being fitted with the outer periphery of the hub shaft 11 at the front side of the inner race.

Next, the assembly of the driving shaft 60 and the inner carrier 50 with the first snap ring S1 interposed therebetween is prepared. Further, in the state in which the snap ring ears SE are held by the jig and the diameter of the first snap ring S1 is increased, the assembly of the driving shaft 60 and the inner carrier 50 are externally inserted into the hub shaft 11 and the first bearing B1 from the front side of the hub shaft 11. Then, the insertion depth of the assembly is restricted as the stepped projection of the driving shaft 60 interferes with the outer race of the first bearing B1.

Next, in this state, the jig, which has spread the first snap ring S1, is removed so that the diameter of the first snap ring S1 is decreased. Then, the diameter of the first snap ring S1 is decreased, and the first bearing B1 is restricted in the axial direction.

Next, the main housing 80 is prepared in the state in which the second bearing B2 is fitted into the inner peripheral surface of the main housing 80 and the main housing 80 is restricted in the axial direction by the snap ring. Further, the main housing is fitted into the outer peripheral surface of the driving shaft 60. The main housing 80 is inserted until the inner race of the second bearing B2 interferes with the stepped projection provided on the outer peripheral surface of the driving shaft 60, and the snap ring is installed on the outer periphery of the driving shaft 60 and restricts the axial position of the second bearing B2 with respect to the driving shaft 60.

Meanwhile, during the assembling process, the process of installing the friction plate 49 between the inward teeth 47 and the outward teeth 57 may be performed at an appropriate timing.

In addition, the present invention provides a method of disassembling the hybrid driving module.

The hybrid driving module may be disassembled in the reverse order of the assembling process.

First, the snap ring fitted with the outer periphery of the driving shaft 60 at the front side of the second bearing B2 is removed, and the main housing 80, in which the second bearing B2 is restricted in the axial direction, is detached forward.

Next, the snap ring ears SE of the first snap ring S1 exposed forward through the first groove 63 is held by the jig, and the diameter of the first snap ring S1 is increased, such that the restriction in the axial direction of the first snap ring S1 with respect to the first bearing B1 is released. In this state, the assembly of the driving shaft 60, the inner carrier 50, and the first snap ring S1 is detached forward from the hub shaft 11 and the first bearing B1.

Next, the second snap ring S2 of the hub shaft 11 is removed, and the first bearing B1 is detached forward from the hub shaft 11.

Next, the chamber plate 75, the piston plate 70, and the elastic body E disposed between the chamber plate 75 and the piston plate 70 are detached.

Meanwhile, during the disassembling process, the process of detaching the friction plate 49 may be performed at an appropriate timing.

### [Modified Example of Hybrid Driving Module]

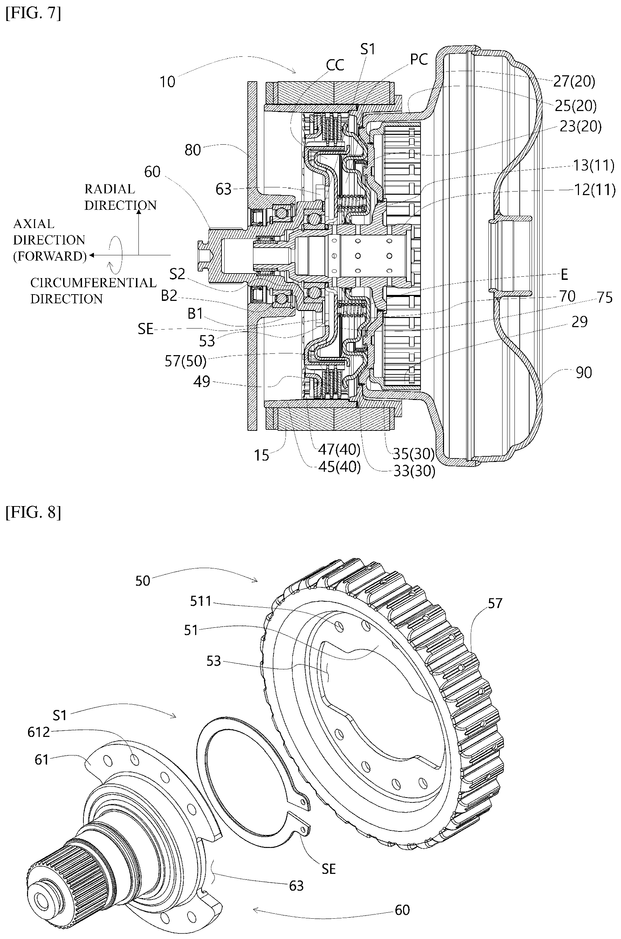

Hereinafter, a second embodiment of the hybrid driving module according to the present invention will be described with reference to FIGS. 1 to 3 and 7 to 9. A difference from the first embodiment will be mainly described. Therefore, the matters, which will not be directly described in the second embodiment, may be understood with reference to the first embodiment.

In the first embodiment, the recessed grooves 513 are provided in the centripetal extension portion 51 of the inner carrier 50 and provided at the positions corresponding to the positions of the first grooves 63 of the centrifugal extension portion 61 of the driving shaft 60. However, in the second in the embodiment, second grooves 53 recessed radially outward may be provided in the centripetal extension portion 51 of the inner carrier 50, instead of the recessed groove 513.

Because the second groove 53 provides a predetermined space rearward of the snap ring ear SE, which makes it easy for the jig to hold the snap ring ears SE.

The second grooves 53 may be provided as two or more second grooves 53 radially disposed with respect to a center of the inner carrier 50. Therefore, it is possible to implement the weight balance and improve the convenience of assembling because no directionality occurs. Of course, the second groove 53 may also be provided as one, three, four, or more second grooves 53. The second grooves 53 may be formed altogether during a process of trimming or piercing a central portion of the inner carrier 50 by using a press. That is, a separate additional processing is not required to form the second groove 53.

The first embodiment provides the recessed grooves 513, and the second embodiment provides the second grooves 53. However, the recessed groove 513 or the second groove 53 may be excluded if there is no difficulty in manipulating the snap ring ears SE even though the above-mentioned configuration is not provided.

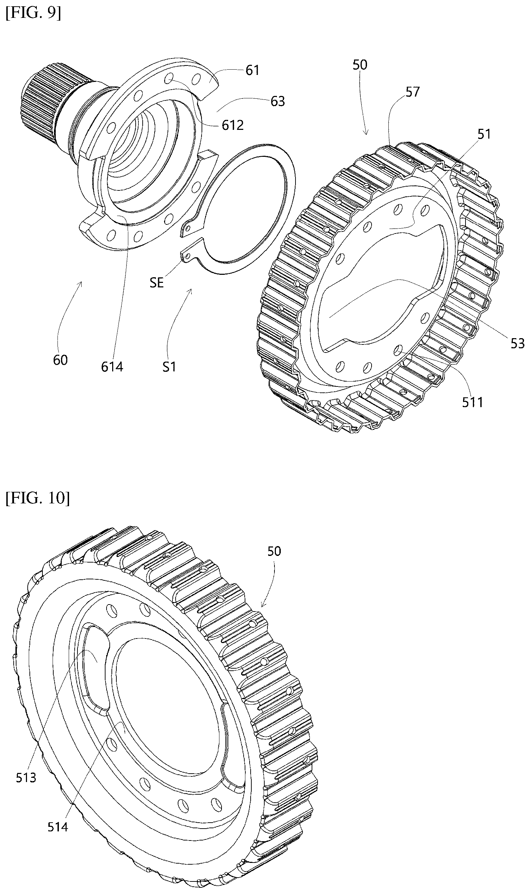

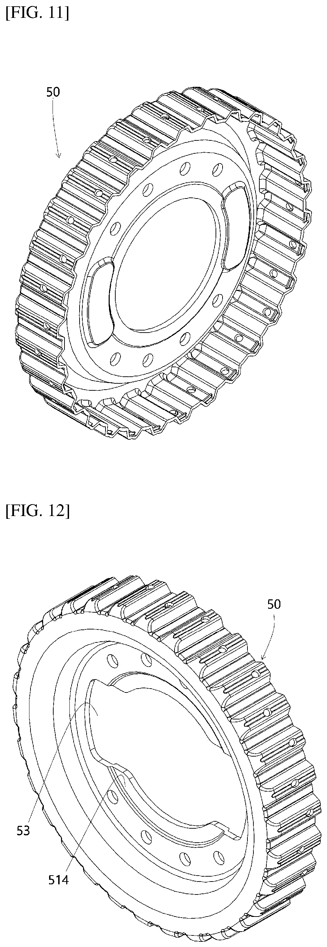

Hereinafter, a third embodiment of the hybrid driving module according to the present invention will be described with reference to FIGS. 10 and 11. A difference from the first embodiment will be mainly described. Therefore, the matters, which will not be directly described in the third embodiment, may be understood with reference to the first embodiment.

Unlike the first embodiment, the hybrid driving module of the third embodiment has a structure in which a snap ring accommodation groove 514 is provided in the inner carrier 50. As described above, the snap ring accommodation groove may, of course, be provided in the inner carrier 50 as well as the driving shaft 60, or the snap ring accommodation groove may be provided only in the inner carrier 50.

The snap ring accommodation groove 514 may have a shape connected to the recessed groove 513. The recessed groove 513 and the snap ring accommodation groove 514 are connected to each other in the radial direction.

An axial depth of the snap ring accommodation groove 514 may be equal to or smaller than an axial depth of the recessed groove 513. The embodiment discloses a shape in which the snap ring accommodation groove 514 is recessed less deeply than the recessed groove 513.

The snap ring accommodation groove 514 may be processed together with the recessed groove 513 when the press processing is performed on the recessed groove 513.

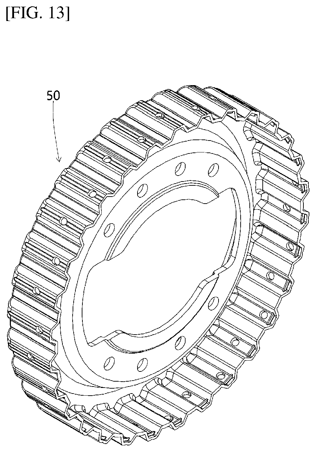

Hereinafter, a fourth embodiment of the hybrid driving module according to the present invention will be described with reference to FIGS. 12 and 13. A difference from the second embodiment will be mainly described. Therefore, the matters, which will not be directly described in the fourth embodiment, may be understood with reference to the first and second embodiments.

Unlike the second embodiment, the hybrid driving module of the fourth embodiment has a structure in which the snap ring accommodation groove 514 is provided in the inner carrier 50. As described above, the snap ring accommodation groove may, of course, be provided in the inner carrier 50 as well as the driving shaft 60, or the snap ring accommodation groove may be provided only in the inner carrier 50.

The snap ring accommodation groove 514 may have a shape connected to the second groove 53. The second groove 53 and the snap ring accommodation groove 514 may be connected to each other in the circumferential direction.

An axial depth of the snap ring accommodation groove 514 may be smaller than a thickness of the centripetal extension portion.

The snap ring accommodation groove 514 may be formed by press processing, and the second groove 53 may be processed after the snap ring accommodation groove 514 is processed.

While the present invention has been described above with reference to the accompanying drawings, the present invention is not limited to the drawings and the embodiments disclosed in the present specification, and it is apparent that the present invention may be variously changed by those skilled in the art without departing from the technical spirit of the present invention. Further, even though the operational effects of the configurations of the present invention have not been explicitly disclosed and described in the description of the embodiment of the present invention, the effects, which can be expected by the corresponding configurations, should, of course, be acceptable.

## Claims

1. A hybrid driving module comprising:
a rotor hub having a hub shaft and configured to support a rotor;
a driving shaft disposed coaxially with the hub shaft, disposed forward of the hub shaft, and connected to an engine;
a first bearing configured to connect the hub shaft and the driving shaft to allow a relative rotation between the hub shaft and the driving shaft;
a first snap ring configured to restrict the driving shaft and the first bearing in at least one axial direction; and
an inner carrier coupled to the driving shaft so that the inner carrier is restricted in the axial direction and a rotation of the inner carrier is restricted,
wherein the first snap ring is interposed between the driving shaft and the inner carrier in the axial direction and restricted in the axial direction together with the driving shaft and the inner carrier,
wherein the driving shaft and the inner carrier are coupled such that a centrifugal extension portion extending radially outward from the driving shaft and a centripetal extension portion radially inward from the inner carrier face each other in the axial direction,
wherein a first groove recessed radially inward is provided in a partial section of the centrifugal extension portion based on a circumferential direction, and
wherein snap ring ears, which are held to adjust a diameter of the first snap ring, are exposed forward in the axial direction through the first groove.

2. The hybrid driving module of claim 1, wherein a snap ring accommodation groove for accommodating the first snap ring is provided in a rear surface of the driving shaft.

3. The hybrid driving module of claim 1, wherein a snap ring accommodation groove for accommodating the first snap ring is provided in a front surface of the inner carrier.

4. The hybrid driving module of claim 1, wherein snap ring accommodation grooves for accommodating the first snap ring are provided in a rear surface of the driving shaft and a front surface of the inner carrier.

5. The hybrid driving module of claim 2, wherein the snap ring accommodation groove is provided at a radial inner end of the centrifugal extension portion.

6. The hybrid driving module of claim 1, wherein a first through-hole and a second through-hole are respectively provided in the centrifugal extension portion and the centripetal extension portion, and the first through-hole and the second through-hole are aligned and coupled by a rivet.

7. The hybrid driving module of claim 1, wherein the first groove is provided as two or more first grooves radially disposed with respect to a center of the driving shaft.

8. The hybrid driving module of claim 1, wherein a second groove recessed radially outward is provided in a section of the centripetal extension portion corresponding to a section in which the first groove is provided in the circumferential direction.

9. The hybrid driving module of claim 8, wherein the second groove is provided as two or more second grooves radially disposed with respect to a center of the inner carrier.

10. The hybrid driving module of claim 1, wherein a recessed groove recessed axially rearward is provided in a section of the centripetal extension portion corresponding to a section in which the first groove is provided in the circumferential direction.

11. The hybrid driving module of claim 10, wherein the recessed groove is provided as two or more recessed grooves radially disposed with respect to a center of the inner carrier.

12. The hybrid driving module of claim 1, wherein the first bearing comprises:
an inner race externally inserted into an outer peripheral surface of the hub shaft;
an outer race internally inserted into an inner peripheral surface of the driving shaft; and
a rolling element interposed between the inner race and the outer race, and
wherein the first snap ring protrudes radially inward to interfere with the outer race in the axial direction from a radially outer side of the outer race.

13. The hybrid driving module of claim 12, wherein the outer race of the first bearing interferes with the first snap ring such that a rearward axial movement of the outer race of the first bearing related to the driving shaft is restricted, and
wherein the outer race of the first bearing interferes with a stepped projection shape of the driving shaft such that a forward axial movement of the outer race of the first bearing related to the driving shaft is restricted.

14. The hybrid driving module of claim 12, wherein the inner race of the first bearing interferes with a stepped projection shape of the hub shaft such that a rearward axial movement of the inner race of the first bearing related to the hub shaft is restricted, and
wherein a forward axial movement of the inner race of the first bearing is restricted by a second snap ring coupled to an outer peripheral surface of the hub shaft.

15. A method of assembling the hybrid driving module of any one of claims 1 to 14, the method comprising:
externally inserting a first bearing into the hub shaft from a front side of the hub shaft and fixing the first bearing in the axial direction;
externally inserting an assembly of the driving shaft, the inner carrier, and the first snap ring into the first bearing from a front side of the hub shaft in a state in which the snap ring ear is held by a jig and a diameter of the first snap ring is increased; and
allowing the first snap ring to restrict the first bearing in the axial direction by decreasing the diameter of the first snap ring by removing the jig in the state in which the assembly is externally inserted.

16. A method of disassembling the hybrid driving module of any one of claims 1 to 14, the method comprising:
releasing the restriction of the first snap ring in the axial direction with respect to the first bearing by increasing a diameter of the first snap ring by holding the snap ring ears from a front side of the hub shaft by using a jig;
detaching the assembly of the driving shaft, the inner carrier, and the first snap ring forward from the first bearing; and
releasing the first bearing in the axial direction with respect to the hub shaft and detaching the first bearing forward from the hub shaft.
